# EUROPEAN PATENT APPLICATION

(11) **EP 4 372 016 A1**
(43) Date of publication of application: **22.05.2024**
(21) Application number: 22208336.2
(22) Date of filing: 18.11.2022
(51) Int. Cl.: C08F 110/06, C08F 2/01, C08F 2/00, C08F 4/651

(54) **OLEFIN POLYMERIZATION PROCESS COMPRISING THE USE OF AN ANTISTATIC COMPOSITION**

(71) Applicant: Basell Poliolefine Italia S.r.l., 20121 Milano (IT)
(72) Inventor: BALESTRA, Enrico, 44123 Ferrara (IT); MAZZUCCO, Antonio, 44122 Ferrara (IT); DI FEDERICO, Pier Luigi, 44122 Ferrara (IT); PANTALEONI, Roberto, 44122 Ferrara (IT); CAPISANI, Paolo, 44122 Ferrara (IT)
(74) Representative: LyondellBasell

(57) **Abstract**

A process for the preparation of polyolefins comprising the step of polymerizing an olefin in the liquid phase in the presence of a polymerization catalyst and of an antistatic composition, wherein the polymer slurry is conveyed in a transfer line comprising a horizontal section and a series of vertical sections connected by bent sections, with the antistatic composition injected in the first portion of the first section of the series of vertical sections.

## Description

### FIELD OF THE INVENTION

The present disclosure relates to a process for the preparation of polyolefins comprising the use of an antistatic composition injected at a specific step of the process.

The present disclosure relates also to a plant for the preparation of polyolefins comprising a slurry polymerization reactor and apparatus for mixing and injecting an antistatic composition downstream said slurry polymerization reactor.

### BACKGROUND OF THE INVENTION

Antistatic agents are used in processes for the polymerization of olefins to avoid electrostatic charging in order to reduce wall sheeting and formation of polymer agglomerates in the polymerization reactor or in downstream equipment such as degassing and recovery vessels. In the context of olefin polymerization, antistatic agents are also called antifouling agents, polymerization process aids, activity inhibitors, productivity inhibitors or kinetic modifiers. The antistatic agents comprise antistatically-acting compounds which have polar functional groups such as acid or ester groups, amine or amide groups or hydroxyl or ether groups. Examples of antistatically-acting compounds are polysulfone copolymers, polymeric polyamines, polyalcohols, hydroxyesters of polyalcohols, salts of alkylarylsulfonic acids, polysiloxanes, alkoxyamines, polyglycol ethers, etc.

US 5,410,002, for example, discloses a polymerization process in which antistatic compounds are used to eliminate or reduce the build-up of polymer particles on the walls of a gas-phase polymerization reactor. Those antistatic compounds are capable of selectively inhibiting the polymerization on polymer particles smaller than 850 µm, the latter being responsible for fouling problems and polymer sheeting. A class of those antistatic/antifouling compounds are the N-alkyl diethanolamines, such as Atmer 163 commercialized by Croda.

A drawback of antistatic agents used in the polymerization of olefins is that they may negatively impact the activity of olefin polymerization catalysts. Also, their use is sometimes affected by constraints due to the need of obtaining polyolefins fit for application in food, beverage and medical packaging.

WO2017/108337 A1 discloses a process for the preparation of polyolefins comprising the use of an antistatic composition comprising: (a) a compound of formula R-OH, wherein R represents hydrogen or a linear or branched, saturated alkyl group having from 1 to 15 carbon atoms; and (b) an oligomeric or polymeric organic compound having one or more terminal hydroxyl groups and a specific viscosity. It is also disclosed the slurry polymerization of liquid propylene carried out in a loop reactor followed by a gas-phase polymerization carried out in fluidized-bed reactor, with the injection of the antistatic composition that can be implemented in several steps of the process, e.g., downstream the loop reactor or in the gas-phase reactor.

In the type of process outlined above for the polymerization of propylene, the polymer slurry is continuously recirculated in the loop reactor, but a fraction of it is continuously discharged to a transfer line comprising a pipe provided with heating means. The discharge into the transfer line involves a pressure drop, so that liquid propylene is evaporated by the heating means distributed along a suitable length of the pipe at lower pressure than that inside the loop reactor and a turbulent flow comprising polymer and gaseous monomers is generated. Typically, the pipe of the transfer line is bent one or more times, depending on the size of the plant and other factors.

In the type of process outlined above it has been experienced that the point of addition of the antistatic composition is critical, and that a partial deposit of the antistatic composition in the transfer line can occur if the injection point is not properly selected. More particularly, due to a non-efficient dispersion, a highly viscous layer of antistatic composition is deposited on the walls of the transfer line and reacts with the cocatalyst and with polymer fines present in the liquid slurry to create a fouling, which affects the operability of downstream equipment.

It is thus desirable to provide a process in which the antistatic composition can be used without causing the formation of fouling in the transfer line or in other parts of the apparatuses downstream the polymerization slurry loop reactor.

### SUMMARY OF THE INVENTION

The present disclosure provides a process for the preparation of polyolefins comprising the step of polymerizing an olefin in the liquid phase in the presence of a polymerization catalyst and of an antistatic composition comprising, with respect to the total weight of the antistatic composition:
(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40°C of at least 20 mm²/sec (DIN 51562);

wherein in said polymerization step a polymer slurry is formed and a part of it is withdrawn and made to advance along a path comprising a horizontal section and a series of vertical sections connected by bent sections, with the first section of said series of vertical sections comprising a first portion not subjected to heating and a second portion subjected to heating, said other vertical sections also comprising portions subjected to heating, whereby at the end of said path said polymer slurry is converted into a stream comprising polymer particles and gaseous monomers, which are separated in a solid-gas separation step;
wherein said antistatic composition is added to said polymer slurry in said first portion not subjected to heating of said first section of said series of vertical sections.

The present disclosure also provides a plant for the preparation of polyolefins comprising at least a slurry polymerization reactor, a transfer line for the polymer slurry formed in said reactor, an apparatus for mixing and injecting an antistatic composition in said transfer line, and a solid-gas separation apparatus connected to said transfer line at the end thereof;
wherein said transfer line comprises a pipe comprising a horizontal section and a series of vertical sections connected by bent sections, with the first section of said vertical sections comprising a first portion not equipped with heating means and a second portion equipped with heating means, said other vertical sections also comprising portions equipped with heating means;
wherein said antistatic composition is injected into said first portion not equipped with heating means of said first section of said series of vertical sections.

### BRIEF DESCRIPTION OF THE DRAWINGS

Figure 1 shows schematically a set-up of a polymerization process comprising a loop-reactor and a gas-phase reactor for carrying out the process for the preparation of polyolefins of the present disclosure; and
Figure 2 shows schematically an apparatus for mixing and injecting an antistatic composition for use in the process of Fig. 1;
Figure 3 shows schematically a set-up of a polymerization process comprising two loop-reactors for carrying out the process for the preparation of polyolefins of the present disclosure.

### DETAILED DESCRIPTION OF THE INVENTION

The present disclosure provides a process for the polymerization of olefins, such as 1-olefins, i.e., hydrocarbons having terminal double bonds, without being restricted thereto. Typical 1-olefins are linear or branched 1-alkenes having from 2 to 12 carbon atoms, in particular linear 1-alkenes having from 2 to 10 carbon atoms such as ethylene, propylene, 1-butene, 1-pentene, 1-hexene, 1-heptene, 1-octene, 1-decene or branched 1-alkenes having from 2 to 10 carbon atoms such as 4-methyl-1-pentene, conjugated and non-conjugated dienes such as 1,3-butadiene, 1,4-hexadiene or 1,7-octadiene or vinylaromatic compounds such as styrene or substituted styrene. It is also possible to polymerize mixtures of various 1-olefins. Olefins that can be polymerized with the process of the present disclosure include those in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

According to an embodiment, the process can be used for the homopolymerization or copolymerization of ethylene or for the homopolymerization or copolymerization of propylene. According to an embodiment, comonomers for use in ethylene polymerization are 1-alkenes having from 3 to 8 carbon atoms such as 1-butene, 1-pentene, 1-hexene and/or 1-octene in amount of up to 20 wt.% or from 0.01 wt.% to 15 wt.%, or from 0.05 wt.% to 12 wt.%. According to another embodiment, comonomers for use in propylene polymerization are ethylene and/or 1 butene and/or 1-hexene in amount of up to 40 wt.% or from 0.5 wt.% to 35 wt.%.

The process of the present disclosure allows the preparation of any types of common olefin polymers. According to an embodiment, the prepared olefin polymers can be broad molecular weight olefin polymers and, particularly, multimodal olefin polymers whereby the term multimodal refers to the modality of the molecular weight distribution. As used in the art, and also used herein, multimodal shall include bimodal. Such polymers can be obtained from polymerizing olefins in a cascade of two or more polymerization reactors or in different zones of a multizone reactor under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. In addition to the molecular weight distribution, the olefin polymer can also have a comonomer distribution. In an embodiment, the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight or monomodal olefin polymers.

The polymerization of olefins can be carried out using customary olefin polymerization catalysts. That means the polymerization can be carried out using titanium-based Ziegler-Natta-catalysts, Phillips catalysts based on chromium oxide, or single-site catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts may be designated as hybrid catalysts.

According to an embodiment, catalysts for the process of the present disclosure are Ziegler-Natta catalysts comprising:
(i) a solid catalyst component comprising Mg, Ti, an halogen and an electron donor compound (internal donor),
(ii) an alkylaluminum compound, and
(iii) optionally, an electron-donor compound (external donor).

Component (i) can be prepared by contacting a magnesium halide, a titanium compound having at least a Ti-halogen bond, and optionally an electron donor compound. The magnesium halide can be MgCl₂ in active form which is widely known from the patent literature as a support for Ziegler-Natta catalysts. The titanium compounds can be TiCl₄ or TiCl₃. Ti-haloalcoholates of formula Ti(OR)_{n-y}X_{y}, where n is the valence of titanium, y is a number between 1 and n-1 X is halogen and R is a hydrocarbon radical having from 1 to 10 carbon atoms, can also be used.

Electron donor compounds for preparing Ziegler type catalysts are for example alcohols, glycols, esters, ketones, amines, amides, nitriles, alkoxysilanes and aliphatic ethers. These electron donor compounds can be used alone or in mixtures with other electron donor compounds.

Other solid catalyst components which may be used are those based on a chromium oxide supported on a refractory oxide, such as silica, and activated by a heat treatment. Catalysts obtainable from those components consist of chromium (VI) trioxide chemically fixed on silica gel. These catalysts are produced under oxidizing conditions by heating the silica gels that have been doped with chromium(III)salts (precursor or precatalyst). During this heat treatment, the chromium(III) oxidizes to chromium(VI), the chromium(VI) is fixed and the silica gel hydroxyl group is eliminated as water.

Still other solid catalyst components which may be used are single-site catalysts supported on a carrier, such as metallocene catalysts comprising:
- at least a transition metal compound containing at least one n bond; and
- at least a cocatalyst selected from an alumoxane or a compound able to form an alkylmetallocene cation.

According to embodiments of the disclosure, when the catalyst includes an alkylaluminum compound, such as in Ziegler Natta catalysts, the molar ratio of component (a) to alkylaluminum compound introduced into the polymerization reactor is from 0.05 to 3, or from 0.1 to 2, or from 0.5 to 1.

The catalysts may be optionally subjected to prepolymerization before being fed to the polymerization reactor. In an embodiment the prepolymerization occurs in a loop reactor, The prepolymerization of the catalyst system may be carried out at a low temperature, in a range of from 0°C to 60°C.

The process of the present disclosure can be carried out in any polymerization plant comprising one or more liquid-phase polymerization reactor and optionally one or more gas-phase polymerization reactors. Examples of liquid-phase reactors are loop reactors and continuously stirred tank reactors (CSTR). Examples of gas-phase reactors include fluidized bed reactors. The process of the present disclosure can be carried in two or more cascade reactors, giving rise to a sequential multistage polymerization process. For instance, a liquid-phase loop reactor can be used to prepare a first polymer component, which is successively fed to a gas-phase reactor to prepare a second polymer component. Accordingly, an olefin polymer endowed with a multi-modal molecular weight distribution can be obtained, as well as an olefin copolymer comprising two or more components having a different comonomer content.

In an embodiment of the present disclosure, the polymerization process includes a gas-phase polymerization, i.e., the solid polymers are obtained from a gas-phase of the monomer or the monomers. Such gas-phase polymerizations may be carried out at pressures of from 0.1 to 20 MPa, or from 0.5 to 10 MPa, or from 1.0 to 5 MPa and polymerization temperatures from 40 to 150°C or from 65 to 125°C.

Gas-phase polymerization reactors can be, for example, horizontally or vertically stirred reactor, fluidized bed gas-phase reactors or multizone circulating reactors.

Fluidized-bed polymerization reactors are reactors in which the polymerization takes place in a bed of polymer particles which is maintained in a fluidized state by feeding in gas at the lower end of a reactor, for example below a gas distribution grid having the function of dispensing the gas flow, and taking off the gas again at its upper end. The reactor gas is then returned to the lower end to the reactor via a recycle line equipped with a compressor and a heat exchanger. The circulated reactor gas is, for example, a mixture of the olefins to be polymerized, inert gases such as nitrogen and/or lower alkanes such as ethane, propane, butane, pentane or hexane and optionally a molecular weight regulator such as hydrogen. According to an embodiment, nitrogen or propane can be used as inert gas, if appropriate in combination with further lower alkanes. The velocity of the reactor gas has to be sufficiently high firstly to fluidize the mixed bed of finely divided polymer present in the tube serving as polymerization zone and secondly to remove the heat of polymerization effectively. The polymerization can also be carried out in a condensed or super-condensed mode, in which part of the circulating reaction gas is cooled to below the dew point and returned to the reactor separately as a liquid and a gas-phase or together as a two-phase mixture in order to make additional use of the enthalpy of vaporization for cooling the reaction gas.

According to an embodiment of the present disclosure, the polymer slurry withdrawn from the slurry polymerization step is made to advance along a path comprising a horizontal section and a series of vertical sections connected by bent sections. Depending on the size of the plant and other factors, the path of the polymer slurry comprises from 1 to 13 vertical sections connected by bent sections, preferably from 3 to 9 vertical sections.

According to an embodiment of the present disclosure, the first vertical section of the path of the polymer slurry comprises a first portion not subjected to heating and a second portion subjected to heating, and the other vertical sections downstream the first vertical section also comprise portions subjected to heating, so that at the end of the path said polymer slurry is converted into a two-phase stream comprising polymer particles and gaseous monomers, which are separated in a solid-gas separation step.

According to an embodiment of the present disclosure, the antistatic composition is added to the polymer slurry in the first portion not subjected to heating of the first section of the series of vertical sections.

According to an embodiment of the present disclosure, the first portion not subjected to heating of the first section of the series of vertical sections is shorter than the second portion subjected to heating of the first section of the series of vertical sections. Preferably, the first portion not subjected to heating is equal to or less than 1/3 of the length of the second portion subjected to heating of the first vertical section.

According to an embodiment of the present disclosure, the process for the preparation of polyolefins comprises feeding the polymer particles separated in the solid-gas separation step to a gas-phase polymerization step to be subjected to further polymerization.

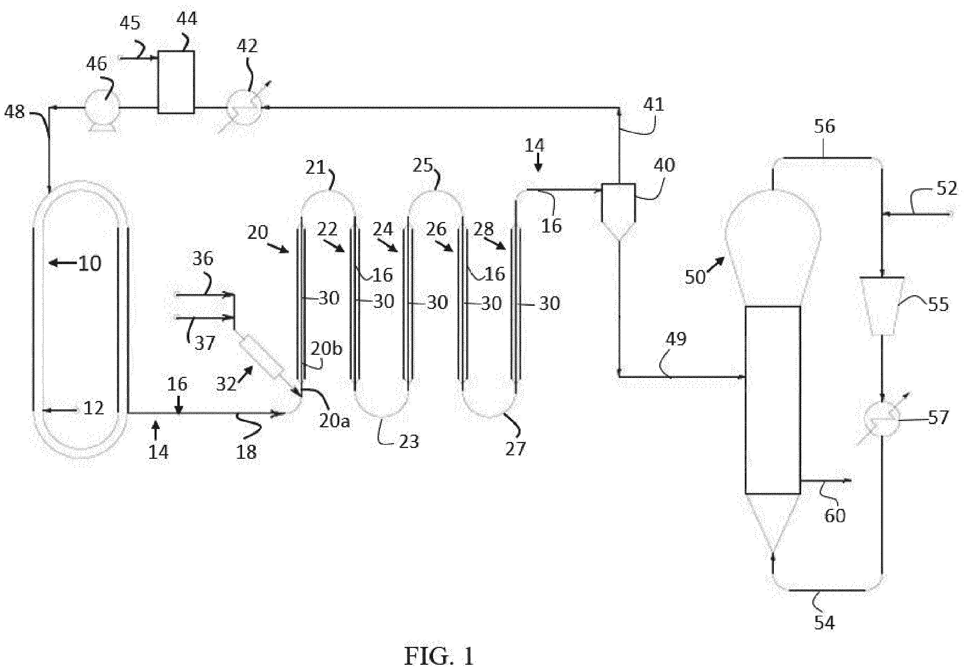

A cascade polymerization reactor, representing an embodiment, will now be described in detail with reference to the enclosed Figure 1, which is a diagrammatic representation and has to be considered illustrative and not limitative of the scope of the invention.

In such embodiment, the slurry polymerization of liquid propylene is carried out in a loop reactor 10. Schematically, catalyst components, co-catalyst, and propylene and optionally comonomers are introduced into the loop reactor, as shown by arrow 12. In the case of use of a Ziegler/Natta catalyst comprising a solid component supported on active MgCl₂, the solid component can be fed as such or in a pre-polymerized form.

Loop reactor 10 may be the first polymerization reactor of the process, or there can be other reactor(s) upstream reactor 10. For the purposes of the present description, reactor 10 can receive from line 12 a polymer produced in other upstream reactor(s) or a prepolymer and/or a polymerization catalyst or catalyst component. In the simplified drawing of Figure 1 feed lines for catalyst, monomer, molecular weight regulator and other possible ingredients have been omitted for simplicity.

Most of the polymer slurry is continuously recirculated in the loop reactor 10, but a fraction of it is continuously discharged to a transfer line 14, connected to a flash chamber 40. The transfer line 14 consists of a pipe 16 comprising a horizontal section 18 and a series of vertical sections 20, 22, 24, 26, 28 connected by bent sections 21, 23, 25, 27. The vertical sections of pipe 16 are equipped with heating means 30, for example steam jackets. The horizontal section 18 can or cannot be equipped with heating means.

The first vertical section 20 of the series of vertical sections comprises a first portion 20a not equipped with heating means, and a second portion 20b equipped with heating means 30. The first portion 20a is shorter than the second section 20b. Preferably, the first portion 20a is equal to or less than 1/3 of the length of the second portion 20b of the first vertical section 20.

Fig. 1 shows a series of 5 vertical sections for the pipe 16, but, depending on the size of the plant and other factors, pipe 16 may comprise from 1 to 12 vertical sections connected by bent sections, preferably from 3 to 9 vertical sections.

According to an aspect of the invention, an antistatic composition is injected in the first portion 20a of the first vertical section 20 of pipe 16.

The antistatic composition comprises (with respect to the total weight of the antistatic composition):
(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40°C of at least 20 mm²/sec (DIN 51562);

In one embodiment, the compound (a) of formula R-OH is water. According to other embodiments, the compound (a) of formula R-OH is an alcohol selected from methanol, ethanol, 1-propanol, 1-butanol, 1-pentanol, 1-hexanol, 1-heptanol, 1-octanol, 1-nonanol, 1-decanol, undecan-1-ol, dodecan-1-ol, tridecan-1-ol, 1-tetradecanol, pentadecan-1-ol, isobutanol, isoamyl alcohol, 2-methyl-1-propanol, phenethyl alcohol, tryptophol, isopropanol, 2-butanol, 2-pentanol, 2-hexanol, 2-heptanol, cyclohexanol, tert-butyl alcohol, tert-amyl alcohol, 2-methyl-2-pentanol, 2-methylhexan-2-ol, 2-methylheptan-2-ol, 3-methyl-3-pentanol and 3-methyloctan-3-ol.

In some embodiments, the oligomeric or polymeric organic compound (b) has a viscosity at 40°C (DIN 51562) of 30-2000 mm²/sec, or of 50-1500 mm²/sec, or of 100-1000 mm²/sec, or of 150-500 mm²/sec, or of 200-400 mm²/sec, or of 250-300 mm²/sec, or of 260-285 mm²/sec. The preferred viscosity at 40°C (DIN 51562) of the oligomeric or polymeric organic compound (b) is in the range of 260 to 285 mm²/sec.

In some embodiments, the oligomeric or polymeric organic compound (b) is selected from alcohols, polyethers, polyalcohols, hydroxyesters of polyalcohols, polyglycol ethers, polyglycol esters and derivatives thereof.

In some embodiments, the oligomeric or polymeric organic compound (b) is a polyether and, more specifically, an alkylene-oxide-derived polymer comprising on average from 10 to 200 repeating units --(CH₂-CHR-O)-, with R being hydrogen or an alkyl group having from 1 to 6 carbon atoms.

In some embodiments, all of terminal groups of the alkylene-oxide-derived polymer are -OH groups.

In some embodiments, the alkylene-oxide-derived polymer is a random copolymer of ethylene oxide and of other alkylene oxides, and the repeating units --(CH₂-CH₂-O)ₙ- derived from ethylene oxide to repeating units --(CH₂-CHR'-O)ₘ- derived from the other alkylene oxides, with R' being an alkyl group having from 1 to 6 carbon atoms, are present in a ratio n : m in the range of from 6 : 1 to 1 : 1, or in the range of from 5 : 1 to 1.5 : 1, or further in the range of from 4 : 1 to 2 : 1.

In some embodiments, the alkylene-oxide-derived polymer is a linear polymer of general formula (I)

HO-(CH₂-CH₂-O)ₙ-(CH₂-CHR'-O)ₘ-H (I)

wherein R' is an alkyl group having from 1 to 6 carbon atoms, or an alkyl group having from 1 to 3 carbon atoms, or a methyl group; n is in the range of from 10 to 180, or from 20 to 100, or from 30 to 50; m is in the range of from 2 to 120, or from 10 to 80, or from 10 to 40; n and m denoting the average number of repeating units.

In some embodiments, alkylene-oxide-derived polymer is a random copolymer of ethylene oxide and propylene oxide.

In some embodiments, the ethylene oxide/propylene oxide copolymer is a linear ethylene oxide/propylene oxide copolymer of general formula (II)

HO-(CH₂-CH₂-O)ₙ-(CH₂-CH(CH₃)-O)ₘ-H (II)

wherein n is in the range of from 10 to 180, or from 20 to 100, or from 30 to 50 and m is in the range of from 2 to 120, or from 10 to 80, or from 10 to 40.

Alkylene-oxide-derived polymers for use in the process of the present disclosure can be prepared by reacting ethylene oxide and the other alkylene oxides, such as propylene oxide, with polyhydric alcohols like diols, e.g., ethylene glycol, triols, e.g. glycerol, or polyols such as e.g. pentaerythritol. The reaction with diols results in linear polymers.

In some embodiments, the oligomeric or polymeric organic compound (b) is water-soluble. In the contest of the present description, "water-soluble" means soluble in water at room temperature, i.e., at about 23°C.

According to embodiments of the disclosure, the amount of antistatic composition introduced into the polymerization reactor is from 1 to 5000 ppm per weight, or from 10 to 3000 ppm per weight, or from 50 to 1000 ppm per weight referring to the weight of the prepared polyolefin.

According to embodiments of the disclosure, the amount of component (a) introduced into the polymerization reactor is from 1 to 70 ppm per weight, or from 1 to 50 ppm per weight, or from 2 to 40 ppm per weight, or from 2 to 30 ppm per weight, or from 3 to 30 ppm per weight, or from 3 to 20 ppm per weight referring to the weight of the prepared polyolefin.

According to embodiments of the disclosure, the amount of component (a) in the antistatic composition introduced into the polymerization reactor is from 0.5 to 50 % by weight, or from 3 to 30 % by weight, or from 5 to 15 % by weight with respect to the total weight of antistatic composition.

According to embodiments of the disclosure, the amount of component (b) in the antistatic composition introduced into the polymerization reactor is from 50 to 99.5 % by weight, or from 70 to 97 % by weight, or from 85 to 95 % by weight with respect to the total weight of antistatic composition.

According to a method of operation, the antistatic composition of the present disclosure can be provided to the polymerization process as a pre-prepared mixture. According to another method of operation, components (a) and (b) of the antistatic composition can be separately provided to the polymerization process.

In a method of operation, the antistatic composition or individual components thereof can be fed to the polymerization reactor in a flow of saturated or unsaturated hydrocarbon having from 2 to 6 carbon atoms that, according to an embodiment, can be a monomer, such as propylene, and, according to another embodiment, an alkane, such as propane. The monomer and the alkane can be either in liquid or gas form.

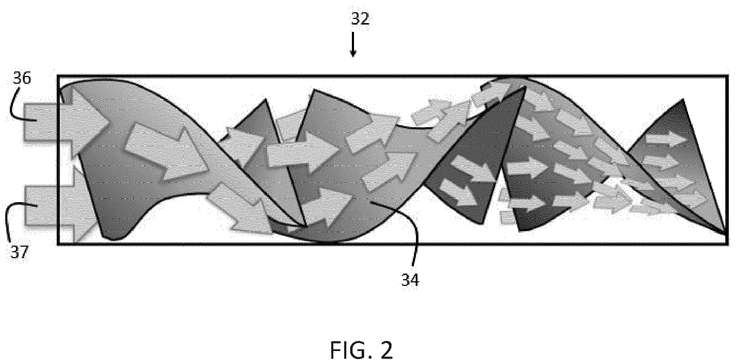

The antistatic composition is injected by means of apparatus 32, in which the components of the composition are mixed, as shown schematically in Fig. 2.

According to an embodiment, apparatus 32 is a static mixer in which the antistatic composition, or the components thereof, and the hydrocarbon are mixed so to create an emulsion of small droplets of the antistatic agent dispersed in the hydrocarbon continuous phase.

In static mixer 32 the energy needed for mixing comes from a loss in pressure as fluids flow through the static mixer. The mixer elements 34 are contained in a cylindrical housing, typically made of stainless steel.

With reference to the figures, arrow 36 designates the feed of the antistatic composition, in which components (a) and (b) have been pre-mixed, and arrow 37 the feed of hydrocarbon.

Upon discharge from reactor 10 the polymer slurry is depressurized and heated in the jacketed portions of the series of vertical sections 20, 22, 24, 26, 28. If the horizontal section 18 is equipped with heating means it is also possible to start heating the polymer slurry in the horizontal section. Under these conditions liquid propylene is evaporated and a turbulent flow is generated inside the pipe 16.

At the outlet of jacketed pipe 16 a two-phase stream containing evaporated monomers and polymer particles is conveyed to flash chamber 40, where the pressure is decreased: the particles of solid polymer fall by gravity towards the bottom of flash chamber 40, while the gaseous monomers flow upwards to the top of chamber 40, where are collected and sent via line 41 to a monomer recovery section comprising a cooler 42, a monomer make-up unit 44 and a compressor 46. Fresh propylene supplied as shown by arrow 45 and recycled propylene from flash chamber 40 are fed via line 48 to loop reactor 10 for continued polymerization.

Propylene polymer discharged from flash tank 40 is transferred via line 49 to a fluidized-bed gas-phase reactor 50, where a propylene copolymer, for example an ethylene propylene elastomeric copolymer, is generated on the homo-PP particles coming from the loop reactor 10. Reactor 50 can be operated at a pressure comprised between 10 and 30 bar and at a temperature comprised between 50 and 110°C. Schematically, fresh monomers 52 are fed to reactor 50 through line 54, unreacted monomers are recycled through line 56 equipped with a compressor 55 and a heat exchanger 57 placed downstream the compressor 55. An heterophasic copolymer or impact PP is discharged from line 40. Such product can be the end product of the polymerization process; thus, it is transferred to the finishing section of the plant, or can be transferred to a second gas-phase reactor (not shown) for enrichment in the copolymer fraction.

The different or else identical polymerization processes can also, if desired, be connected in series and thus form a polymerization cascade. A parallel arrangement of reactors using two or more different or identical processes is also possible.

According to an embodiment, the polymerization processes in the gas-phase reactors according to the present disclosure are carried out in the presence of an alkane having from 3 to 5 carbon atoms as polymerization diluent, e.g., in the presence of propane.

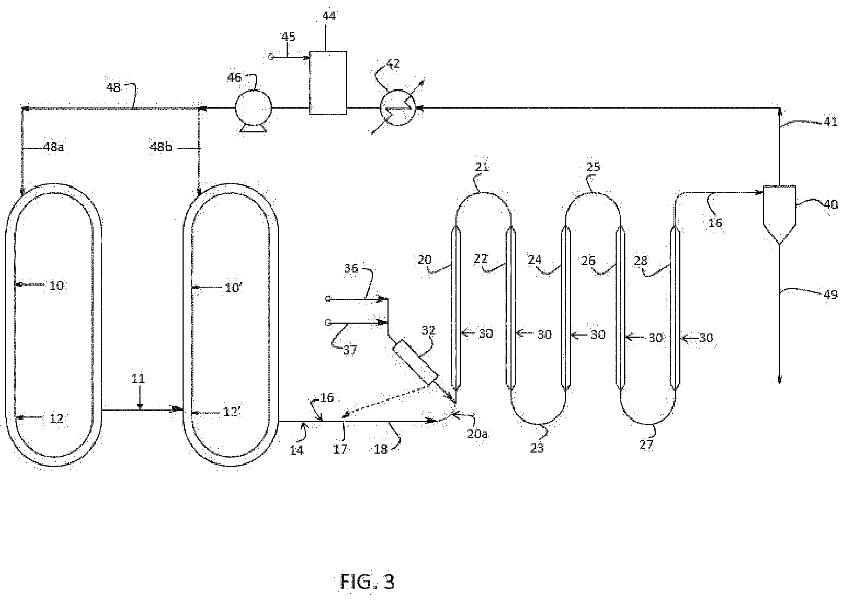

In an embodiment of the present disclosure shown in Fig. 3, which is a diagrammatic representation and has to be considered illustrative and not limitative of the scope of the invention, the polymerization process includes two liquid-phase loop reactors.

In such embodiment, the slurry polymerization of liquid propylene is carried out in a first loop reactor 10 and in a second loop reactor 10'. As described in connection to Fig. 1, catalyst components, co-catalyst, and propylene and optionally comonomers are introduced into the loop reactor, as shown by arrow 12. In the case of use of a Ziegler/Natta catalyst comprising a solid component supported on active MgCl₂, the solid component can be fed as such or in a pre-polymerized form.

A second loop reactor 10' receives from line 11 the polymer produced in upstream reactor 10 and optionally additional catalyst components, co-catalyst, comonomers and propylene are introduced in the second loop reactor, as shown by arrow 12'.

Most of the polymer slurry is continuously recirculated in the loop reactors, but a fraction of it is continuously discharged from reactor 10' to transfer line 14, connected to a flash chamber 40, as described for Fig. 1. The components of transfer line 14 comprise pipe 16 comprising a horizontal section 18 and a series of vertical sections 20, 22, 24, 26, 28 connected by bent sections 21, 23, 25, 27 and up to the flash chamber 40. These components are exactly the same as described for Fig. 1, therefore reference is made to the description of Fig. 1 for the details of such components. The polymer discharged from flash chamber 40 is transferred via line 49 to a finishing section, not shown.

The only difference from the set-up of Fig. 1 is that fresh propylene supplied as shown by arrow 45 and recycled propylene from flash chamber 40 are fed via line 48 to the loop reactors 10, 10' via two lines 48a, 48b, for continued polymerization.

The process of the present disclosure provides a possibility for preparing an olefin polymer by preventing, or minimizing, the formation of fouling in the pipe that transfers the polymer slurry from the discharge of the slurry loop reactor to the apparatus for the separation of the polymer particles from the evaporated unreacted monomers and gases, which can be a flash chamber and/or a gas/solid filter.

Furthermore, the process of the present disclosure provides also a possibility to prevent or minimize the tendency of the olefin polymer particles to stick to the walls of gas-phase reactors, for example when the transfer line feeds the polymer particle to a second polymerization step in a gas-phase reactor, as shown in Fig. 1. This does not only reduce the risk of forming chunks or wall sheeting, which mostly leads to an unavoidable shut-down of the polymerization reactor because of plugging the discharge line, but also improves the fluid-dynamics of the reactor and avoids its fluctuations.

Using the antistatic composition and adding it to the polymer slurry as described in the present disclosure does not only result in a process for the polymerization of olefins which is simple to carry out, but the polymerization process has also a good operability. That means that the tendency for forming polymer deposits on the rector wall, i.e., reactor fouling, for forming lumps and for forming fines, i.e., for forming very small polyolefin particles, is reduced. Moreover, the activity of the catalyst is improved or at least not impaired and the product properties of the prepared polyolefins are not deteriorated.

### EXAMPLES

The following examples are given to illustrate the present invention without any limiting purpose.

### Example 1

### Preparation of the Ziegler-Natta solid catalyst component

A solid catalyst component was prepared with the procedure described in Example 1of EP0 728 769 B.

### Catalyst Activation and Prepolymerization

Before introducing it into the polymerization reactors, the solid catalyst component prepared as described above was contacted with aluminum-triethyl (TEAL) and with cyclohexylmethyldimethoxysilane (donor C) under the conditions reported in Table 1.

The activated catalyst discharged from the activation vessel was continuously fed, together with liquid propylene, to a prepolymerization loop reactor operated at the conditions reported in Table 1.

### Polymerization

The polymerization run was conducted in continuous mode in two loop reactors operated in series, according to the set-up of Fig. 3, and at the same operating conditions. The prepolymerized catalyst was discharged from the prepolymerization reactor and was continuously fed to the liquid phase loop reactor10. A propylene homopolymer was prepared in the liquid loop reactors. Liquid propylene was continuously fed to the loop reactors 10, 10'. Make-up propylene and hydrogen as molecular weight regulator were fed to the loop reactors 10, 10' via lines 48a, 48b. A polypropylene slurry was discharged from the loop reactors 10, 10', and allowed to continuously flow through transfer line 14 comprising a pipe 16 having an horizontal section 18 and a series of vertical sections 20, 22, 24, 26 and 28, each externally heated by steam jackets 30 in which hot steam is circulated.

An antistatic composition comprising 7 %w of water and 93 %w of Polyglykol PE-K 270 commercialized by Clariant was fed by means of the static mixer 32 in the first portion 20a not equipped with heating means of the first vertical section 20 of pipe 16. The flow rate of the antistatic composition feed was such as to obtain in the polymer an amount of antistatic of 440 ppm (wt).

After the addition of the antistatic composition, the polymer slurry entered the steam jacketed portion 30 of section 20 of pipe 16, and then in the other sections 22, 24, 26 and 28, also equipped with jackets 30, wherein the slurry was heated up to reach a temperature of 75°C with consequent evaporation of the liquid phase. Successively the stream of polypropylene and evaporated propylene obtained at the outlet of the pipe 16 was sent to a flash tank 40, where the evaporated monomer was separated from the polymer particles. The tangential entry of the above stream ensured a gas/solid separation by centrifugal effect. The flash tank 40 was operated at the pressure of 18 bar. The particles of solid polymer fell by gravity towards the bottom of the tank, while the gaseous phase exiting from the top was sent to the monomer recovery section. Polypropylene particles were discharged from the bottom of flash tank 40 and conveyed to the downstream finishing section.

The temperature inside the pipe 16 downstream the injection of the antistatic composition was constantly controlled in cascade with the pressure of the steam supplied to the jacketed portions of the pipe to detect whether the heat exchange at the jacketed portions of the pipe was effective or if a fouling occurred inside pipe 16, in which case an insulation effect was detected and higher steam pressure, which is indicative of higher steam supply temperature, was required to evaporate the liquid phase.

In Example 1 no insulation effect was detected as the steam supply pressure indicates a normal operating value, showing that no fouling occurred and thus that the addition of the antistatic composition was effective and ensured a very stable operation of the plant for the duration of the trial.

### Example 2C (comparative)

Example 1 was repeated with the difference that the same antistatic agent was injected into the transfer line 14, at the beginning of the horizontal section 18, at the point designated with 17. In this case, the antistatic effect was lower, as shown by a much higher pressure of the steam supplied to the jackets of pipes 30 at similar operating conditions in terms of production rate, antistatic feed flow rate and controlled temperature of the process gas separated in the flash drum, as reported in Table 1 below, which indicated the formation of an insulation layer inside the pipe 16.

**Table 1**

| **Example** | **1** | **2C** |
|---|---|---|
| **Precontact** | | |
| Temperature (°C) | 15 | 15 |
| Residence time (min) | 14 | 15 |
| TEAL/catalyst (g/g) | 5.4 | 5.3 |
| TEAL/donor ratio (g/g) | 90 | 85 |

| **Prepolymerization** | | |
|---|---|---|
| Temperature (°C) | 20 | 20 |
| Residence time (min) | 7.5 | 7.5 |

| **Loop reactor in liquid phase** - propylene homopolymerization | | |
|---|---|---|
| Production rate (t/h) | 21.2 | 20.4 |
| Temperature (°C) | 74 | 74 |
| Pressure (barg) | 39.5 | 39 |
| Residence time (min) | 72 | 64 |

| **Loop reactor slurry discharge line and flash tank** | | |
|---|---|---|
| Temperature at flash tank (°C) | 75 | 76 |
| Pressure of steam supply (barg) | 0.13 | **0.90** |
| Antistatic amount (ppm wt) | 440 | 350 |

The examples above show that the selection of the point at which the antistatic composition is injected is critical. Injection in the first of the vertical sections of the path along which the polymer slurry discharged from the loop reactor is made to advance ensures that fouling of the transfer line is avoided or minimized.

## Claims

1. A process for the preparation of polyolefins comprising the step of polymerizing an olefin in the liquid phase in the presence of a polymerization catalyst and of an antistatic composition comprising, with respect to the total weight of the antistatic composition:
(a) from 0.5 to 50 % by weight of a compound of formula R-OH wherein R represents hydrogen or a linear or branched, saturated alkyl group having from 1 to 15 carbon atoms; and
(b) from 50 to 99.5 % by weight of an oligomeric or polymeric organic compound having one or more terminal hydroxyl groups and a viscosity at 40°C of at least 20 mm²/sec (DIN 51562);
wherein in said polymerization step a polymer slurry is formed and a part of it is withdrawn and made to advance along a path comprising a horizontal section and a series of vertical sections connected by bent sections, with the first section of said series of vertical sections comprising a first portion not subjected to heating and a second portion subjected to heating, said other vertical sections also comprising portions subjected to heating, whereby at the end of said path said polymer slurry is converted into a two-phase stream comprising polymer particles and gaseous monomers which are separated in a solid-gas separation step;
wherein said antistatic composition is added to said polymer slurry in said first portion not subjected to heating of said first section of said series of vertical sections.

2. The process according to claim 1, wherein said first portion not subjected to heating of said first section of said series of vertical sections is shorter than said second portion subjected to heating of said first section of said series of vertical sections.

3. The process according to claim 1 or 2, wherein said first portion not subjected to heating of said first section of said series of vertical sections is equal to or less than 1/3 of the length of said second portion subjected to heating of the first vertical section.

4. The process according to any preceding claim, wherein said polymer particles separated in said solid-gas separation step are fed to a gas-phase polymerization step.

5. The process according to any preceding claim, wherein said step of polymerizing an olefin in the liquid phase is carried out in two loop reactors in series.

6. The process according to any of the preceding claims, wherein the compound (a) of formula R-OH is water.

7. The process according to any of the preceding claims, wherein the oligomeric or polymeric organic compound (b) is selected from alcohols, polyethers, polyalcohols, hydroxyesters of polyalcohols, polyglycol ethers, polyglycol esters and derivatives thereof.

8. The process according to any of the preceding claims, wherein the oligomeric or polymeric organic compound (b) is an alkylene-oxide-derived polymer comprising on average from 10 to 200 repeating units --(CH2-CHR-O)-, with R being hydrogen or an alkyl group having from 1 to 6 carbon atoms.

9. A plant for the preparation of polyolefins comprising a slurry polymerization reactor (10), a transfer line (14) the polymer slurry formed in said reactor, an apparatus (32) for mixing and injecting an antistatic composition in said transfer line, and a solid-gas separation apparatus (40) connected to said transfer line (14) at the end thereof;
wherein said transfer line (14) comprises a pipe (16) comprising a horizontal section (18) and a series of vertical sections (20, 22, 24, 26, 28) connected by bent sections (21, 23, 25, 27), with the first section (20) of said vertical sections comprising a first portion (20a) not equipped with heating means and a second portion (20b) equipped with heating means (30), said other vertical sections (22, 24, 26. 28) also comprising portions equipped with heating means (30);
wherein said antistatic composition is injected into said first portion not equipped with heating means (20a) of said first section (20) of said series of vertical sections (20, 22, 24, 26. 28).

10. The plant according to claim 9, wherein said first portion (20a) not equipped with heating means of said first section (20) of said series of vertical sections (20, 22, 24, 26, 28) is shorter than said second portion equipped with heating means (20b) of said first section (20) of said series of vertical sections (20, 22, 24, 26, 28).

11. The plant according to claim 9 or 10, wherein said first portion (20a) not equipped with heating means of said first section (20) of said series of vertical sections (20, 22, 24, 26, 28) is equal to or less than 1/3 of the length of said second portion (20b) equipped with heating means of said first vertical section (20).

12. The plant according to any of claims 9-11, wherein said antistatic composition is injected into said first portion (20a) not equipped with heating means of said first section (20) of said series of vertical sections (20, 22, 24, 26. 28) by means of apparatus (32) in which the components of said composition are mixed.

13. The plant according to any of claims 9-12, wherein said apparatus (32) is a static mixer in which the energy needed for mixing comes from a loss in pressure as said antistatic composition flows through said static mixer.

14. The plant according to any of claims 9-13, wherein said polymer particles separated in said solid-gas separation apparatus (40) step are fed to a gas-phase polymerization reactor (50).

15. The plant according to any of claims 9-13, wherein a second slurry polymerization reactor (10') is connected in series downstream said slurry polymerization reactor (10) and upstream said transfer line (14).
